(19) **Europäisches Patentamt / European Patent Office / Office européen des brevets**

(11) **EP 1 375 987 B1**

(12) **FASCICULE DE BREVET EUROPEEN**

(45) Date de publication et mention
de la délivrance du brevet:
**15.03.2006 Bulletin 2006/11**

(51) Int Cl.:
***F16K 11/07*** *(2006.01)* ***F16K 31/122*** *(2006.01)*

(21) Numéro de dépôt: **03101091.1**

(22) Date de dépôt: **18.04.2003**

(54) **Vanne fluidique à hystérésis**

Hysteresis Flüssigkeitsventil

Fluid hysteresis valve

(84) Etats contractants désignés:
**AT BE BG CH CY CZ DE DK EE ES FI FR GB GR
HU IE IT LI LU MC NL PT RO SE SI SK TR**

(30) Priorité: **28.06.2002 FR 0208128**

(43) Date de publication de la demande:
**02.01.2004 Bulletin 2004/01**

(73) Titulaire: **Thales**
**75008 Paris (FR)**

(72) Inventeurs:
• **Goutelard, Hervé,**
**Thales Intellectual Property**
**94117 CX Arcueil (FR)**

• **Le Dard, Michel,**
**Thales Intellectual Property**
**94117 CX Arcueil (FR)**

(74) Mandataire: **Lucas, Laurent Jacques et al**
**Marks & Clerk France**
**31-33 Avenue Aristide Briand**
**94117 Arcueil Cédex (FR)**

(56) Documents cités:
**EP-A- 0 669 665** **DE-A- 3 408 182**
**DE-C- 407 720** **US-A- 4 590 958**

• **PATENT ABSTRACTS OF JAPAN vol. 006, no. 224
(M-170), 9 novembre 1982 (1982-11-09) & JP 57
126788 A (MITSUBISHI JUKOGYO KK), 6 août
1982 (1982-08-06)**

## Description

La présente invention se rapporte aux vannes commandées par un dispositif fluidique et qui présentent un effet d'hystérésis, c'est à dire dont l'ouverture et la fermeture s'effectuent sur deux seuils de pression différents à deux instants différents. Elle s'applique en particulier à des circuits électrolytiques de batterie à eau de mer, pour alimenter un véhicule sous-marin autonome.

Dans un tel véhicule sous-marin autonome, il est nécessaire de mettre en fonction une batterie à eau de mer lorsque, du fait de l'immersion, la pression interne atteint une première valeur $p_1$ et d'arrêter le fonctionnement de cette batterie a une pression $p_2$ inférieure à $p_1$ pour assurer un arrêt de sécurité.

Une vanne fluidique est connue du document DE 34 08 182 A qui décrit une vanne à tiroir commandée par une pression de contrôle et un ressort taré.

Les dispositifs couramment utilisés, tels que les détecteurs manométriques, commandent une électrovanne par l'intermédiaire d'un circuit électrique. Ces systèmes présentent divers inconvénients. En particulier il faut une source d'énergie électrique autonome pour les faire fonctionner puisque la batterie principale n'est pas active avant qu'elle n'ait été alimentée par l'intermédiaire de cette vanne. La disponibilité de cette source autonome est aléatoire en particulier dans le temps. On ne peut donc pas stocker le véhicule pour un temps indéterminé en ayant la certitude qu'il sera tout de suite disponible ne cas de besoin inopiné.

Pour pallier ces inconvénients, l'invention propose une vanne fluidique à hystérésis, principalement caractérisée en ce qu'elle comprend un corps creux, une pièce mobile formant piston et pouvant se déplacer dans ce corps entre d'une part une chambre située à l'une des extrémités du corps, comprenant un ressort taré s'appuyant sur la pièce et recevant par une première canalisation une pression calibrée, et d'autre part un premier tiroir situé à l'autre extrémité du corps; ce piston comprenant un premier usinage pour pouvoir mettre en communication une deuxième et une troisième canalisation formant le circuit commandé principal, et un deuxième usinage pour délimiter un deuxième tiroir; la vanne comprenant en outre une cloison pour séparer les deux tiroirs, un circuit fluidique de contre réaction reliant le premier et le deuxième tiroir, et une quatrième canalisation pour amener une pression de commande dans le deuxième tiroir.

Selon une autre caractéristique, la vanne comprend en outre une cinquième canalisation munie d'un clapet anti retour reliant le premier tiroir et la quatrième canalisation.

Selon une autre caractéristique, le corps creux comprend à son extrémité délimitant le premier tiroir une partie démontable et la pièce mobile comprend à son extrémité délimitant le deuxième tiroir une pièce démontable, pour pouvoir modifier les dimensions du deuxième tiroir.

Selon une autre caractéristique, on utilise cette vanne pour commander une vanne de dérivation permettant d'alimenter un bloc électrochimique à partir d'un réservoir de soude par l'intermédiaire d'une pompe de circulation.

Selon une autre caractéristique, on utilise cette vanne pour commander l'arrêt de la vidange d'un réservoir d'eau de pluie lorsque le niveau de l'eau dans celui-ci atteint une valeur minimum $h_{min}$.

D'autres particularités et avantages de l'invention apparaîtront clairement dans la description suivante, présentée à titre d'exemple non limitatif en regard des figures annexées qui représentent :

- les figures 1 à 4, des vues en coupe d'une vanne selon l'invention dans différents états de fonctionnement ;
- les figures 5 à 7, des diagrammes de fonctionnement de cette vanne
- la figure 8, une vue en coupe d'un détail d'une variante de réalisation de la vanne des figures 1 à 4 ;
- la figure 9, un schéma d'un dispositif utilisant cette vanne dans un véhicule sous-marin ; et
- la figure 10, un schéma d'un dispositif utilisant cette vanne dans un système de régulation du niveau de l'eau d'un réservoir.

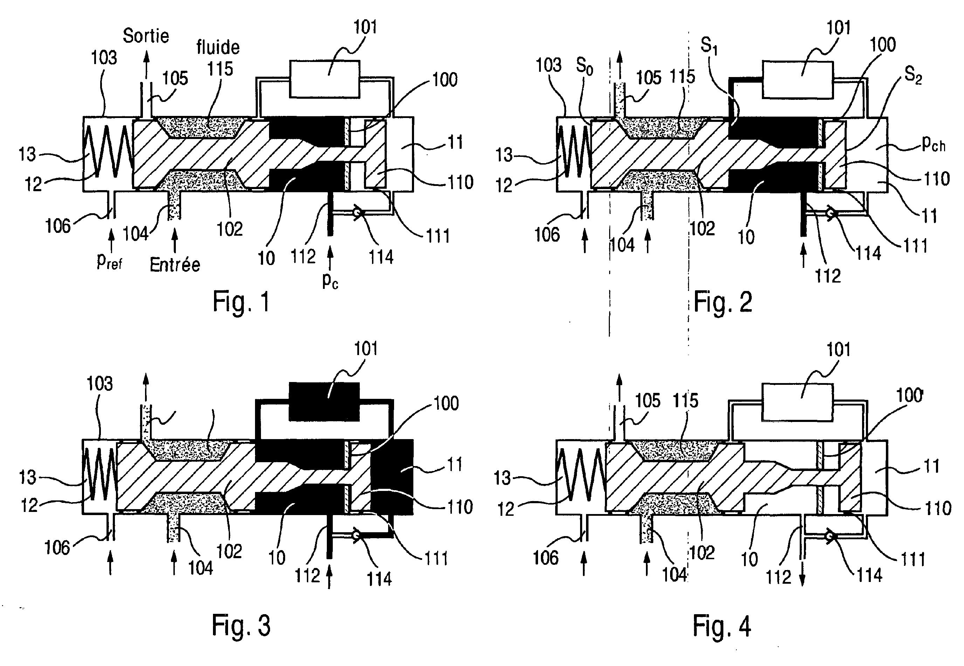

Dans l'exemple représenté sur les figures 1 à 4 la vanne est tubulaire et comprend dans un corps 103 une pièce mobile 102 en forme de piston étagé qui permet par un premier usinage l'ouverture et la fermeture d'un circuit fluidique principal commandé entre une entrée 104 et une sortie 105.

Cette pièce mobile se déplace linéairement dans le corps 103 pour venir obturer la conduite de sortie 105.

La pièce mobile 102 est aussi usinée à son extrémité droite de manière à présenter 2 tiroirs 10 et 11 séparés par une cloison 100 fixée à l'intérieur du corps 103.

A l'extrémité opposée un ressort taré 12 est intercalé entre la pièce 102 et le corps 103 de la vanne en délimitant une chambre 13 qui reçoit par une canalisation 106 une pression extérieure $p_{ref}$ s'ajoutant à la pression du ressort. Cette pression $p_{ref}$ correspond à la pression hydrostatique extérieure dans l'application à un véhicule sous-marin, pression qui varie avec l'immersion.

Les deux tiroirs 10 et 11 sont reliés extérieurement au corps par un circuit fluidique de contre-réaction 101.

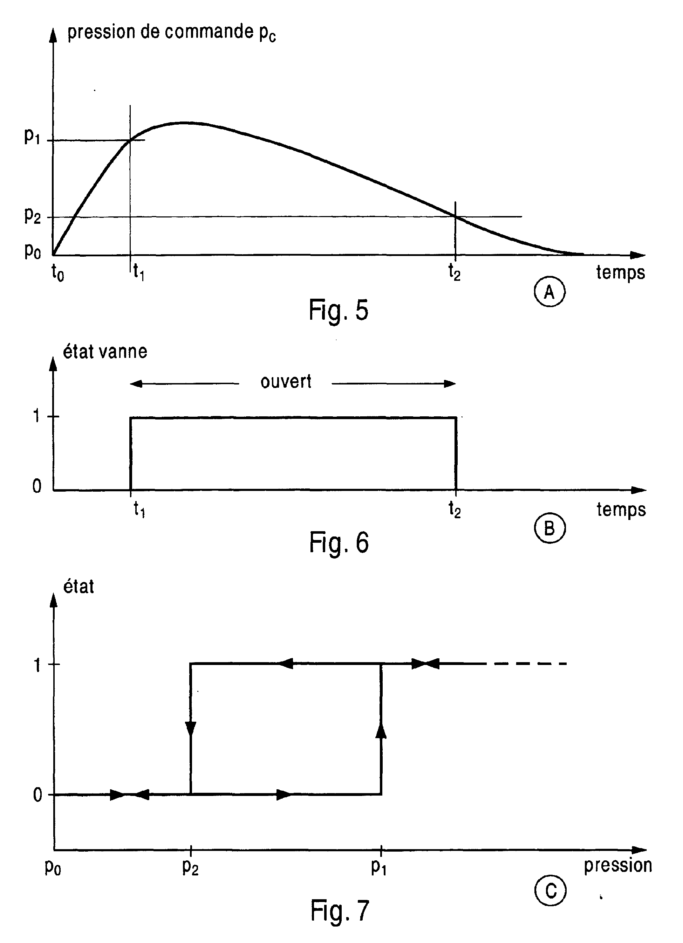

Le fonctionnement dans le temps correspond aux graphiques des figures 5 à 7, qui représentent l'évolution de la pression de commande et de l'état en fonction du temps, et l'évolution de l'état en fonction de la pression.

A un instant $t_o$ le circuit fluidique est au repos et le circuit principal est fermé.

Le fluide de commande sous une pression $p_c$

est alors envoyé par une canalisation 112 dans la chambre 10, correspondant au premier tiroir.

La pièce mobile 102, en se déplaçant vers la gauche ouvre le circuit principal à un instant $t_1$, lorsque la pression $p_c$ passe au dessus d'une valeur $p_1$ telle que :

$$p_1.S_1 = F_{ressort} + p_{ref}.S_0$$

Dans cette expression, les surfaces $S_0$ et $S_1$ sont celles des surfaces droites présentées par la pièce mobile 102 respectivement à son extrémité gauche et à l'extrémité gauche du tiroir 10.

Le fluide passe alors dans le tiroir 11 via le circuit 101 et exerce sur la surface $S_2$ de l'extrémité droite de la pièce 102 une force supplémentaire de manière à maintenir ouvert le circuit principal lorsque la pression $p_c$ diminue. Ainsi l'ouverture est maintenue tant que la relation $p_c S_1 + p_{ch} S_2 > F_{ressort} + p_{ref} S_o$ est maintenue, $p_{ch}$ étant la pression dans la chambre délimitée par le tiroir 11, et $S_2$ la surface de l'extrémité droite de la pièce 102, formant un piston 11.

Lorsque $p_c$ devient inférieur à une pression $p_2$ inférieure à $p_1$, la pièce 102 se déplace vers la droite, ce qui ferme le circuit principal à l'instant $t_2$.

A ce moment, les chambres 10 et 11 se vidangent par la canalisation 112, dont le flux est inversé, et qui est reliée à la chambre 11 par l'intermédiaire d'un clapet anti-retour 114.

Suivant l'application retenue, le tarage du ressort et les surfaces $S_o$, $S_1$ et $S_2$ sont choisis de manière à satisfaire les relations précédentes, compte tenu des pressions qui sont en jeu.

Suivant une réalisation préférée, le tiroir 11 est conçu de manière à pouvoir être changé, ce qui permet de faire varier la surface $S_2$ sans utiliser une autre vanne.

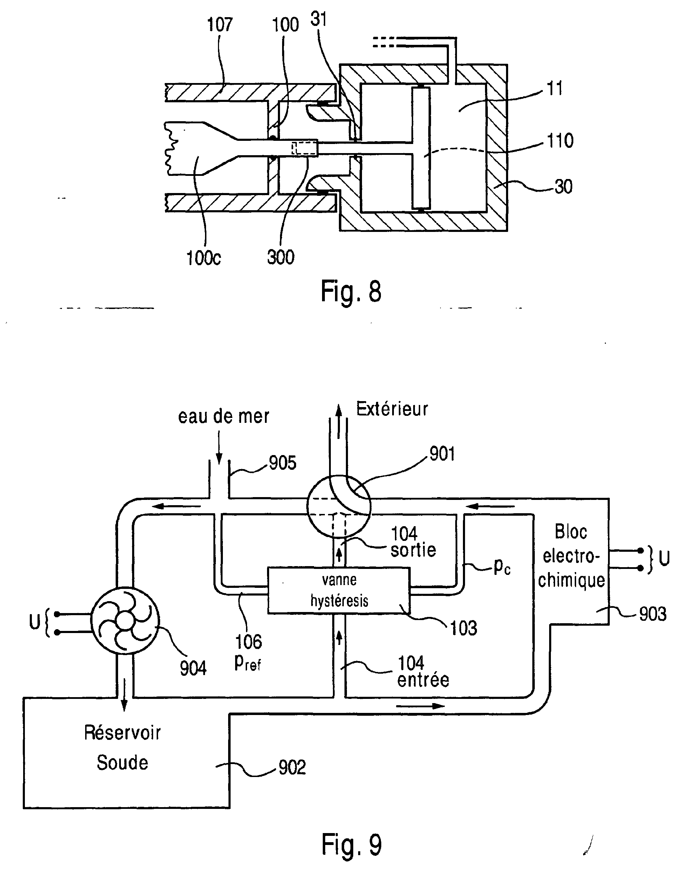

Pour cela, comme représenté sur la figure 8, le tiroir 11 est formé d'une pièce creuse 30 munie d'un palier 31 dans lequel passe l'axe d'un piston 110. Cette pièce et cet axe sont conçus pour être respectivement vissés sur le corps 103 d'une part et sur l'axe principal de la pièce 102 d'autre part en 300.

Suivant une variante, le corps est réalisé sous forme de deux coquilles pour faciliter le montage.

La pression $p_{ch}$ peut être calibrée en plaçant au niveau du circuit 101 un limitateur de pression.

Dans l'application principale à l'alimentation d'un circuit de batterie à eau de mer, représentée en figure 9, la vanne selon l'invention est utilisée dans un circuit d'alimentation d'un véhicule sous-marin par batterie à eau de mer fonctionnant avec un mélange électrolytique, comme vanne de commande d'une vanne de dérivation.

Le circuit fluidique principal commande une vanne de dérivation 901, à la manière d'un interrupteur. La vanne de dérivation est commandée pour évacuer le fluide électrolytique vers l'extérieur (vidange) lorsque la vanne selon l'invention est fermée. Inversement, le fluide reste dans le circuit lorsque la vanne est ouverte.

L'entrée 104 est prise en aval du réservoir 902 contenant l'électrolyte, la sortie 105 constituant la commande de la vanne de dérivation.

La pression de commande est prise en aval du bloc électrochimique fournissant la tension U qui alimente les circuits du véhicule, ainsi que la pompe 904. Quant à la pression de référence, elle est prise au niveau de l'entrée de l'eau de mer.

L'eau de mer pénétrant dans le circuit en 905, la pompe est amorcée et la pression augmente rapidement. La vanne est alors ouverte (instant $t_1$), ce qui assure le fonctionnement du circuit électrolytique.

Une fois l'électrolyte consommé, la pompe n'est plus alimentée de manière nominale et la pression diminue, ce qui entraîne la fermeture de la vanne (instant $t_2$) et la vidange de l'ensemble du circuit.

La pompe de circulation fonctionnant à $\Delta p = p_c - p_{ref}$ constant, lorsque l'immersion du véhicule varie, $p_{ref}$ varie et $p_c$ varie d'autant. Compte tenu des relations réglant le fonctionnement de la vanne, celui-ci est donc indépendant de l'immersion.

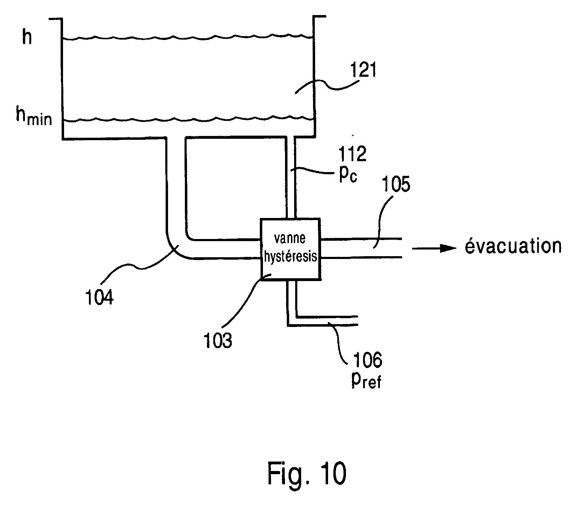

Dans une autre application, destinée à régler le niveau d'eau d'un réservoir 121, comme représenté sur la figure 10, la pression de commande est prise au fond de ce réservoir. La pression de référence est alors la pression atmosphérique.

Le réservoir est alimenté par l'eau de pluie. Quand l'eau atteint un certain niveau h, la vanne s'ouvre puisque la pression $p_c$ est suffisamment grande. Quand l'eau atteint un niveau minimum $h_{min}$, la vanne se ferme.

**Revendications**

1. Vanne fluidique à hystérésis, comprenant un corps creux (103), une pièce mobile (102) formant piston et pouvant se déplacer dans ce corps entre d'une part une chambre (103) située à l'une des extrémités du corps, comprenant un ressort (13) taré s'appuyant sur la pièce et recevant par une première canalisation (106) une pression calibrée, et d'autre part un premier tiroir (11) situé à l'autre extrémité du corps; ce piston comprenant un premier usinage (115) pour pouvoir mettre en communication une deuxième et une troisième canalisation (104,105) formant le circuit commandé principal, et un deuxième usinage (112) pour délimiter un deuxième tiroir (10); la vanne comprenant en outre une cloison (100) pour séparer les deux tiroirs, un circuit fluidique de contre réaction (101) reliant le premier et le deuxième tiroir, et une quatrième canalisation (112) pour amener une pression de commande dans le deuxième tiroir.

2. Vanne fluidique selon la revendication 1, **caractérisée en ce qu'**elle comprend en outre une cinquième canalisation munie d'un clapet anti retour (114) reliant le premier tiroir (11) et la quatrième canalisation (112).

3. Vanne fluidique selon l'une quelconque des revendications 1 et 2, **caractérisée en ce que** le corps creux (103) comprend à son extrémité délimitant le premier tiroir (11) une partie démontable (30) et **en ce que** la pièce mobile comprend à son extrémité délimitant le deuxième tiroir une pièce démontable (110), pour pouvoir modifier les dimensions du deuxième tiroir.

4. Procédé d'utilisation d'une vanne fluidique selon l'une quelconque des revendications 1 à 3, **caractérisé en ce que** l'on utilise cette vanne (103) pour commander une vanne de dérivation (901) permettant d'alimenter un bloc électrochimique (903) à partir d'un réservoir de soude par l'intermédiaire d'une pompe de circulation (904).

5. Procédé d'utilisation d'une vanne fluidique selon l'une quelconque des revendications 1 à 3, **caractérisé en ce que** l'on utilise cette vanne (103) pour commander l'arrêt de la vidange d'un réservoir d'eau de pluie (121) lorsque le niveau de l'eau dans celui-ci atteint une valeur minimum $h_{min}$.


**Patentansprüche**

1. Hysterese-Flüssigkeitsventil mit einem Hohlkörper (103), wobei ein einen Kolben bildendes bewegliches Bauteil (102) sich in diesem Körper zwischen einerseits einer Kammer (103), die sich an einem der Enden des Körpers befindet und eine auf dem Bauteil aufliegende, tarierte Feder (13) aufweist und über eine erste Rohrleitung (106) einen kalibrierten Druck empfängt, und andererseits einem ersten Einschub (11) bewegen kann, der sich am anderen Ende des Körpers befindet, wobei dieser Kolben eine erste Bearbeitung (115), um eine zweite und eine dritte Rohrleitung (104, 105) miteinander verbinden zu können, die den gesteuerten Hauptkreislauf bilden, und eine zweite Bearbeitung (112) aufweist, um einen zweiten Einschub (10) zu begrenzen, wobei das Ventil außerdem eine Trennwand (100), um die beiden Einschübe zu trennen, wobei ein Flüssigkeits-Rückkopplungskreis (101) den ersten und den zweiten Einschub verbindet, und eine vierte Rohrleitung (112) aufweist, um dem zweiten Einschub einen Steuerdruck zuzuführen.

2. Flüssigkeitsventil nach Anspruch 1, **dadurch gekennzeichnet, dass** es außerdem eine mit einem Rückschlagventil (114) versehene fünfte Rohrleitung aufweist, die den ersten Einschub (11) und die vierte Rohrleitung (112) verbindet.

3. Flüssigkeitsventil nach einem der Ansprüche 1 und 2, **dadurch gekennzeichnet, dass** der Hohlkörper (103) an seinem den ersten Einschub (11) begrenzenden Ende einen ausbaubaren Teil (30) aufweist, und dass das bewegliche Bauteil an seinem den zweiten Einschub begrenzenden Ende ein ausbaubares Teil (110) aufweist, um die Abmessungen des zweiten Einschubs verändern zu können.

4. Verfahren zur Verwendung eines Flüssigkeitsventils nach einem der Ansprüche 1 bis 3, **dadurch gekennzeichnet, dass** dieses Ventil (103) verwendet wird, um ein Abzweigungsventil (901) zu steuern, das es ermöglicht, einen elektrochemischen Block (903) ausgehend von einem Natriumcarbonat-Reservoir über eine Umlaufpumpe (904) zu steuern.

5. Verfahren zur Verwendung eines Flüssigkeitsventils nach einem der Ansprüche 1 bis 3, **dadurch gekennzeichnet, dass** dieses Ventil (103) verwendet wird, um das Anhalten der Entleerung eines Regenwasserreservoirs (121) zu steuern, wenn der Wasserpegel in diesem einen Mindestwert $h_{min}$ erreicht.


**Claims**

1. Fluidic valve with hysteresis, comprising a hollow body (103), a moving part (102) forming a piston and able to move in this body between, on the one hand, a chamber (103) situated at one of the ends of the body, comprising a preloaded spring (13) bearing against the part and receiving, via a first duct (106), a calibrated pressure and, on the other hand, a first slide valve (11) situated at the other end of the body; this piston comprising a first machined feature (115) to allow a second and a third duct (104, 105) forming the main controlled circuit to be placed in communication and a second machined feature (112) to delimit a second slide valve (10); the valve further comprising a partition (100) to separate the two slide valves, a feedback fluidic circuit (101) connecting the first and second slide valves, and a fourth duct (112) for applying a control pressure to the second slide valve.

2. Fluidic valve according to Claim 1, **characterized in that** it further comprises a fifth duct equipped with a non-return valve (114) connecting the first slide valve (11) and the fourth duct (112).

3. Fluidic valve according to either one of Claims 1 and 2, **characterized in that** the hollow body (103) comprises, at its ends delimiting the first slide valve (11), a removable part (30), and **in that** the moving part comprises, at its end delimiting the second slide valve, a removable part (110), so that the dimensions of the second slide valve can be altered.

**4.** Method of using a fluidic valve according to any one of Claims 1 to 3, **characterized in that** this valve (103) is used to control a bypass control valve (901) allowing an electrochemical unit (903) to be fed from a tank of sodium hydroxide via a circulation pump (904).

**5.** Method of using a fluidic valve according to any one of Claims 1 to 3, **characterized in that** this valve (103) is used to control the shutting-down of the draining of a rainwater tank (121) when the water level in this tank reaches a minimum value $h_{min}$.

Fig. 1

Fig. 2

Fig. 3

Fig. 4

EP 1 375 987 B1

pression de commande $p_c$

$p_1$

$p_2$

$p_0$

$t_0$    $t_1$    $t_2$    temps

Ⓐ

## Fig. 5

état vanne

ouvert

1

0

$t_1$    $t_2$    temps

Ⓑ

## Fig. 6

état

1

0

$p_0$    $p_2$    $p_1$    pression

Ⓒ

## Fig. 7

**Fig. 8**

**Fig. 9**

h

h_min

121

112
p_c

105

vanne
hystéresis

évacuation

104

103

106
p_ref

Fig. 10